Europäisches Patentamt

(19) European Patent Office

Office européen des brevets

(11) Veröffentlichungsnummer: **0 046 992**
**B1**

(12) **EUROPÄISCHE PATENTSCHRIFT**

(45) Veröffentlichungstag der Patentschrift:
07.03.84

(21) Anmeldenummer: 81106712.3

(22) Anmeldetag: 28.08.81

(51) Int. Cl.³: **F 27 D 5/00, F 27 B 9/24,**
**B 28 B 11/00, C 04 B 33/32,**
**E 04 C 2/04**

(54) **Verfahren zum Herstellen von plattenförmigem, einem Schnellbrandverfahren unterworfenem Gut.**

(30) Priorität: 28.08.80 DE 3032451

(43) Veröffentlichungstag der Anmeldung:
10.03.82 Patentblatt 82/10

(45) Bekanntmachung des Hinweises auf die Patenterteilung:
07.03.84 Patentblatt 84/10

(84) Benannte Vertragsstaaten:
FR IT NL

(56) Entgegenhaltungen:
DE - C - 173 954
FR - A - 410 540
FR - A - 2 303 253
US - A - 2 543 549

(73) Patentinhaber: Buchtal GmbH Keramische Betriebe,
D-8472 Schwarzenfeld (DE)

(72) Erfinder: Cremer, Gottfried, Dr., Steyrer Weg 6,
D-5000 Köln 40 (Junkersdorf) (DE)

(74) Vertreter: Betzler, Eduard, Dipl.-Phys. et al,
P.O.Box 700209 Plinganserstrasse 18a,
D-8000 München 70 (DE)

Verfahren zum Herstellen von plattenförmigem, einem Schnellbrandverfahren unterworfenem Gut.

Die Erfindung bezieht sich auf ein Verfahren zum Herstellen von plattenförmigem, einem Schnellbrand unterworfenen Gut, bei dem das Gut ohne Brennhilfsmittel in einschichtig brennenden Rollenöfen gebrannt wird.

Bei diesem Verfahren durchläuft das Brenngut die Vorheiz-, Brenn- und Kühlzone auf einem Rollenteppich, dessen aus einem Spezialstahl oder Keramikmaterial bestehende Rollen von ausserhalb des Ofens angetrieben werden. Der besondere Vorteil dieser Öfen besteht darin, dass der Einsatz von Wagen und feuerfesten Brennhilfsmitteln entfällt. Diese Transport- und Stützmittel stellen eine erhebliche Masse dar, die vom Ofen aufgeheizt werden muss und in der Kühlzone wieder zur Abkühlung gebracht wird. Es wird also ein erheblicher Teil der dem Ofen zum Brand des Brenngutes zugeführten Energie ungenützt verschwendet.

Bei einschichtig und ohne Einsatz von Transport- und Brennhilfsmitteln betriebenen Rollenöfen wird nicht nur eine wesentliche Energieeinsparung erreicht, sondern es lässt sich auch der Brennvorgang schneller und gleichmässiger durchführen. Man gelangt zu erheblich verkürzten Produktionszyklen.

Im allgemeinen ist es jedoch nicht zu vermeiden, dass die das Brenngut transportierenden Rollen sich unter dem Einfluss der hohen Temperatur etwas verbiegen, unrund werden oder sonstige Deformationen erfahren. Ausserdem kann sich Material von der Glasur des plattenförmigen Brenngutes und aus Masseresten oder dergleichen auf den Rollen aufbauen. Diese Beeinflussung der Rollen durch das Brenngut und durch die Atmosphäre sowie die Temperatur ist unvermeidbar. Die Konsequenz des daraus resultierenden Unrundwerdens oder Unrundlaufens der Rollen ist, dass sich das plattenförmige Brenngut beim Durchgang durch den Ofen wechselseitig verschiebt, so dass es zu unbeabsichtigten Berührungen des plattenförmigen Brenngutes an den Rändern kommt. Dabei treten mitunter Verbackungen infolge der Glasur oder sonstige Beschädigungen der Ränder des plattenförmigen Gutes auf.

Aufgabe der Erfindung ist es, das Verfahren so zu führen, dass gegenseitige Berührungen infolge des unvermeidbaren Unrundlaufens der Rollen bedeutungslos bleiben.

Diese Aufgabe wird erfindungsgemäss dadurch gelöst, dass am Umfang des plattenförmigen Gutes zumindest teilweise ein Rand mit Sollbruchstelle gegenüber dem Mittelteil angeformt wird. Bei diesem Rand ist es dann gleichgültig, ob er verformt, mit benachbarten Rändern verbacken oder beschädigt worden ist. Es besteht immer die Möglichkeit, den Rand des plattenförmigen Gutes nach dem Brennen längs der Sollbruchstelle ohne Schwierigkeiten zu entfernen und damit saubere Ränder aufweisendes plattenförmiges Gut zu erhalten.

Die Schaffung von Sollbruchstellen an plattenförmigen Bauelementen ist aus der DE-C-173 954 bereits bekannt. Bei der Lehre nach dieser Patentschrift geht es aber darum, eine mit Teilungsnuten versehene Platte zur Herstellung eines mosaikartigen Belages zu schaffen. Dabei ist auch vorgesehen, die Platte auf der Oberseite mit erhöhten Seitenrändern zu versehen und in die dadurch begrenzte Vertiefung Stoffstreifen einzulegen. Dieses Vorgehen hat aber nichts mit dem der Erfindung zugrundeliegenden Problem und dessen Lösung zu tun.

In weiterer Ausbildung der Erfindung wird der Rand gegen die Oberfläche des plattenförmigen Gutes nach unten abgesenkt. Man erhält dadurch eine geringere Materialstärke und die Möglichkeit, den überstehenden Rand längs der Sollbruchstelle in besonders einfacher Weise abzutrennen.

Von besonderem Vorteil ist es, wenn man die Sollbruchstelle in diesem abgesetzten Bereich derartig verlegt, dass nach dem Abtrennen des Randes längs der Sollbruchstelle ein schmaler Steg im Abstand einer Fugenbreite oder der Hälfte einer Fugenbreite verbleibt, so dass für die Verlegung solcher Platten automatisch bereits die Fugenbreite mit definiert ist. Damit ergibt sich ein Brenngut, das sich insbesondere für die Verlegung im «Do-it-yourself»-Verfahren eignet.

Ein weiterer Vorteil des erfindungsgemässen Verfahrens besteht darin, dass durch die Absenkung des Randes die Glasur über die Kanten des plattenförmigen Gutes hinaus in Richtung auf diese Ränder abfliessen kann, so dass die Kanten mit überglasiert werden, die Glasur jedoch nicht bis auf die Rollen gelangen kann. Auch dadurch wird das Unrundwerden oder Unrundlaufen der Rollen wenigstens verzögert und eine längere Gebrauchsdauer der Rollen erreicht.

Die Zeichnung zeigt in

Fig. 1 eine Draufsicht auf eine Ausführungsform eines plattenförmigen Gutes, das gemäss der Erfindung hergestellt ist;

Fig. 2 eine Draufsicht auf eine etwas abgeänderte Ausführungsform;

Fig. 3 etwas vergrössert einen Schnitt längs der Linie III-III der Fig. 1;

Fig. 4 etwas vergrössert einen Schnitt längs der Linie IV-IV der Fig. 2.

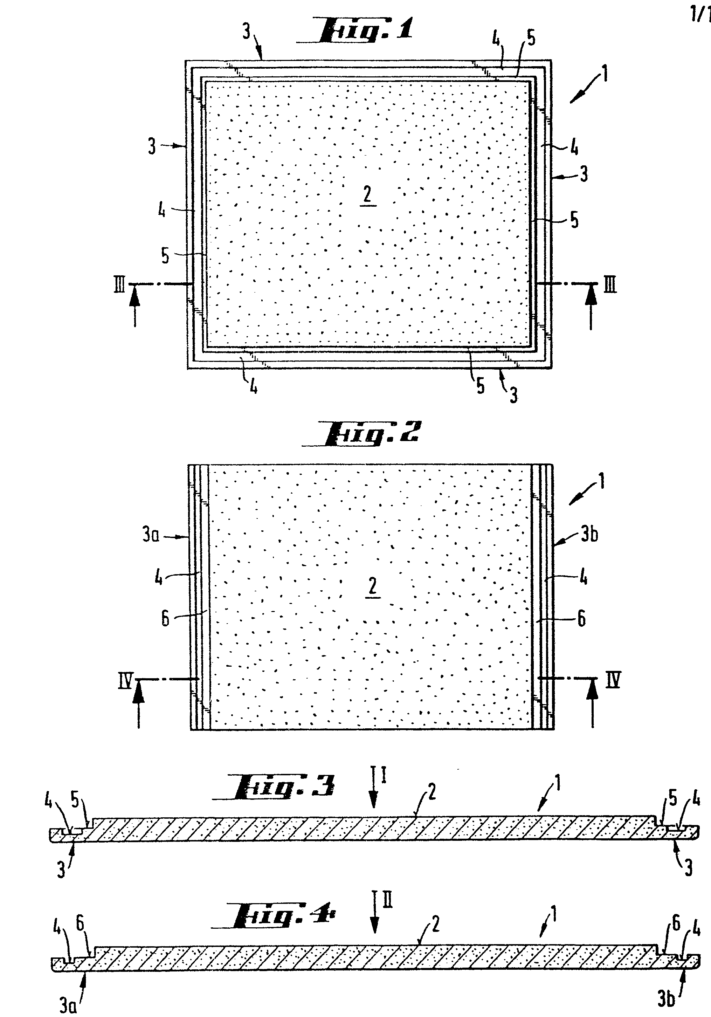

Man erkennt aus Fig. 1 das plattenförmige Gut 1 mit einem Mittelteil 2, der einen Rand 3 aufweist, welcher bei 4 mit einer Sollbruchstelle in Form einer Kerbe oder Rille versehen ist. Bei der Ausführungsform nach Fig. 1 und Fig. 3 verläuft der Rand 3 um den gesamten Umfang des Mittelteils 2.

Bei der Ausführungsform nach Fig. 2 und Fig. 4 ist nur an zwei gegenüberliegenden Seiten des Mittelteiles 2 ein entsprechender Rand 3a bzw. 3b vorgesehen, so dass sich dieses plattenförmige Gut im Strang pressen lässt, der quer zur Auspressrichtung unterteilt wird. Durch entsprechendes Abstandhalten kann hier die Berührung aufeinanderfolgender Platten 1 beim Durchgang durch den Rollenofen vermieden werden. Der nach dem Trennen längs der Sollbruchstelle 4 verbleibende Steg 5 weist bei der Ausführungsform nach Fig. 1 vorzugsweise halbe Fugenbreite auf, so dass es möglich ist, die Platten im «Do-it-yourself»-Verfahren zu verlegen, wobei man automatisch durch bündiges Aneinanderfügen der Platten längs der stehengebliebenen Ränder die gewünschte Fuge erhält. Bei der Ausführungsform nach Fig. 2 weist der stehenbleibende Steg 6 Fugenbreite auf, so dass beim Verlegen durch entsprechendes Drehen der nachfolgenden Platte auch hier wieder jeweils entsprechende Fugen gewährleistet sind.

**Patentansprüche**

1. Verfahren zum Herstellen von plattenförmigem, einem Schnellbrandverfahren unterworfenen Gut (1), bei dem das Gut (1) ohne Brennhilfsmittel in einschichtig brennenden Rollenöfen gebrannt wird, dadurch gekennzeichnet, dass am Umfang des plattenförmigen Gutes (1) zumindestens teilweise ein Rand (3) mit Sollbruchstelle (4) gegenüber dem Mittelteil (2) angeformt wird.

2. Verfahren nach Anspruch 1, dadurch gekennzeichnet, dass der Rand (4) gegen die Ebene der Oberfläche des Mittelteiles (2) nach unten abgesenkt wird.

3. Verfahren nach Anspruch 2, dadurch gekennzeichnet, dass zwischen Plattenumfang und Sollbruchlinie ein Übergangsbereich (Steg 5) vorgesehen wird.

4. Verfahren nach Anspruch 3, dadurch gekennzeichnet, dass der Übergangsbereich (Steg 5) halbe Fugenbreite aufweist.

5. Verfahren nach Anspruch 3, dadurch gekennzeichnet, dass der Übergangsbereich (Steg 5) ganze Fugenbreite aufweist.

**Revendications**

1. Procédé pour la fabrication d'objets (1) en forme de dalles, soumis à un procédé de cuisson rapide dans lequel l'objet (1) est cuit dans des fours à rouleaux cuisant en une couche, caractérisé par le fait que sur la circonférence de l'objet en forme de dalle (1) un point de rupture programmé (4) est formé au moins partiellement sur un bord (3) vis-à-vis de la partie centrale (2).

2. Procédé selon revendication 1 caractérisé par le fait que le bord (4) est abaissé vers le bas contre le plan de la surface de la partie centrale (2).

3. Procédé selon revendication 2 caractérisé par le fait qu'entre la circonférence de la dalle et la ligne de rupture programmée une zone de transition (barrette 5) est prévue.

4. Procédé selon revendication 3 caractérisé par le fait que la zone de transition (barrette 5) a une largeur de fente diminuée de moitié.

5. Procédé selon revendication 3 caractérisé par le fait que la zone de transition (barrette 5) a une largeur de fente entière.

**Claims**

1. A process for producing plate-like, rapidly fired material (1), in the case of which the material is fired in roller kilns in a single layer and without burning tools, characterized in that at the outer edge of the plate-like material (1) a rim (3) with a frangible join (4) is formed opposite the middle part (2).

2. The process as claimed in claim 1 characterized in that the rim (4) is made at a lower level than to the plane of the surface of the middle part (2).

3. The process as claimed in claim 2 characterized in that between the plate edge and the frangible join there is an inbetween part (connection 5).

4. The process as claimed in claim 3, characterized in that the inbetween part (connection 5) has a width equal to half the joint gap width.

5. The process as claimed in claim 3, characterized in that the inbetween part (connection 5) has a width equal to the full joint gap width.

**Fig. 1**

3   4   5

1

3

4

3

4

5

2

5

III            III

4   5   3

**Fig. 2**

1

3a          3b

4            4

6            6

2

IV          IV

**Fig. 3**            I

4  5           2        1        5  4

3                                    3

**Fig. 4**           II

4  6           2        1        6  4

3a                                   3b